# EUROPÄISCHE PATENTSCHRIFT

(11) **EP 2 180 116 B1**
(45) Veröffentlichungstag und Bekanntmachung des Hinweises auf die Patenterteilung: **02.09.2015**
(21) Anmeldenummer: 09013359.6
(22) Anmeldetag: 22.10.2009
(51) Int. Cl.: B29C 69/00, E04F 15/10, B29C 47/00, B29L 31/10, B29C 65/56, B29C 65/00, B29K 105/26, B29K 27/06, B29C 45/00

(54) **Verfahren zum Herstellen von Bodenplatten aus einem elastischen Kunstoffwerkstoff**
Method for producing floor panels made of elastic plastic material
Procédé de fabrication des panneaux de revêtement de sol en matière plastique élastique

(30) Priorität: 22.10.2008 DE 102008052774
(43) Veröffentlichungstag der Anmeldung: 28.04.2010
(60) Teilanmeldung: 13005653.4
(73) Patentinhaber: Nicocyl-GmbH, 44581 Castrop-Rauxel (DE)
(72) Erfinder: Fröhlich, Jakob, 58730 Fröndenberg (DE)
(74) Vertreter: Tilmann, Max Wilhelm

(56) Entgegenhaltungen:
- EP-A1- 1 045 083
- EP-A1- 1 416 100
- WO-A1-2004/012918
- WO-A1-2006/033706
- WO-A2-2004/110738
- GB-A- 762 581
- GB-A- 1 212 983
- JP-A- 3 092 253
- US-A1- 2007 234 670
- US-B1- 6 306 318

## Beschreibung

Die Erfindung betrifft ein Verfahren zum Herstellen von Bodenplatten aus einem elastischen Kunststoffwerkstoff.

Derartige Bodenplatten sind aus dem Stand der Technik bekannt. Häufig werden diese aus Polyvinylchlorid (PVC) gefertigt und dienen als robuste und schwingungsdämpfende Bodenbeläge, die insbesondere in Werkstätten, Fabrikhallen und Bürogebäuden zum Einsatz kommen können. In der Regel werden die Bodenplatten als quadratische oder rechteckige Platten hergestellt, zur Erzeugung des Bodenbelags aneinander gelegt und mit dem Untergrund verklebt, um ein Auseinanderrutschen der einzelnen Bodenplatten zu vermeiden. Aus dem Stand der Technik sind zudem Bodenplatten bekannt, die ein Feder-Nut-System aufweisen, das es ermöglicht, die einzelnen Bodenplatten ineinander zu stecken, um hierdurch ein Verlegen der Platten zu vereinfachen und - in Abhängigkeit von der Ausführung des Feder-Nut-Systems - ein Auseinanderrutschen auch ohne ein Verkleben mit dem Untergrund zu vermeiden.

Aus Kostengründen werden die aus dem Stand der Technik bekannten Bodenplatten ausschließlich durch Urformen und insbesondere durch Spritzgießen hergestellt. Hierbei wird der Kunststoffwerkstoff grundsätzlich als Neuware eingesetzt, da lediglich Neuware ein ausreichend homogenes Schrumpfverhalten beim Abkühlen nach dem Spritzgießen gewährleistet. Eine Verwendung von Recyclingkunststoff, die aus ökologischer und gegebenenfalls auch aus wirtschaftlicher Sicht vorteilhaft wäre, war bislang nicht vorgesehen, da das Schrumpfverhalten der aus einer Vielzahl von unterschiedlichen (Recycling-)Kunststoffkomponenten bestehenden Bodenplatten nicht ausreichend genau vorhersagbar wäre und die Bodenplatten daher nach dem Abkühlen regelmäßig nicht innerhalb der geforderten Toleranzen liegen würden.

Die WO 2006/033706 A1 offenbart ein Verfahren zum Herstellen von Dielen, die einen Kern aufweisen, der zumindest aus einem Polymer und zumindest einem Typ von Naturfaser bestehen. Es wird beschrieben, dass durch einen Bearbeitungsschritt in die hergestellten Dielen ein Feder-Nut-System eingebracht werden kann. Die WO 2006/033706 A1 offenbart damit Dielen, die einen Kern umfassen, der ein Polymermaterial und einen Naturfaser aufweist. Die Verwendung von Polymermaterial und einer Naturfaser führt zu Überlegungen, die auf ein "2-Komponenten-System" abstellen und von einer Verwendung eines einzelnen Kunststoffmaterials unterschiedlich sind.

Die JP 309 2253 A offenbart die mechanische Bearbeitung eines plattenförmigen Kunststoffmaterials.

Die GB 762 581 A offenbart eine Platte aus einem Kunststoff, in die maschinell durch einen Fräser Mulden eingebracht werden.

Die GB 1 212 983 A offenbart Bodenbaueinheiten, die aus einem Kunststoff bestehen können und über ein Loch-Bolzen-System zu größeren Einheiten verbunden werden können.

Die EP 1 416 100 A offenbart ein Plattenelement aus einem extrodierbaren Material aus einer Mischung aus Naturstoffen, insbesondere Holzfasern und Holzspänen mit Polypropylen, wobei das Plattenelement als quaderförmiges Bauelement hergestellt und die Profilierung im Randbereich durch spanende Bearbeitung erreicht werden kann.

Ausgehend von diesem Stand der Technik lag der Erfindung die Aufgabe zugrunde, ein Verfahren anzugeben, das wirtschaftlich die Fertigung derartiger Bodenplatten mit einem Feder-Nut-System auch aus einem Recyclingkunststoff ermöglicht.

Diese Aufgabe wird durch das Verfahren gemäß Patentanspruch 1 gelöst. Vorteilhafte Ausführungsformen des erfindungsgemäßen Verfahrens sind Gegenstand der abhängigen Patentansprüche und ergeben sich aus der nachfolgenden Beschreibung der Erfindung.

Durch das erfindungsgemäße Verfahren wird es ermöglicht, die Bodenplatten aus einem Recyclingkunststoff herzustellen, indem diese zunächst mit einem Übermaß vorgeformt werden, wodurch dem schlecht kalkulierbaren Schrumpfverhalten des Recyclingkunststoffs Rechnung getragen werden kann, und das Feder-Nut-System daraufhin spanend eingebracht wird.

Bevorzugt wird Polyvinylchlorid (PVC) als Kunststoffwerkstoff verwendet, da dieser Werkstoff die erforderlichen Materialkennwerte, insbesondere hinsichtlich der Härte, der Verschleißfestigkeit und des Dämpfungsverhaltens aufweist. Zudem steht PVC, das für die Ummantelung von elektrischen Leitungen hauptsächlich verwendet wird, in großen Mengen als Recyclingmaterial zur Verfügung, das aus ökologischen und auch wirtschaftlichen Gründen bei dem erfindungsgemäßen Verfahren verwendet wird.

In einer weiterhin bevorzugten Ausführungsform der vorliegenden Erfindung wird ein Feder-Nut-System eingebracht, dessen Steckrichtung parallel zur Plattenebene ausgerichtet ist. Ein solches Feder-Nut-System weist den Vorteil auf, dass es im zusammengesteckten Zustand der Bodenplatten nicht mehr sichtbar ist. Zum Einbringen eines solchen Feder-Nut-Systems können vorzugsweise ein Kopf- sowie ein Seitenfräser, die selbstverständlich auch kombiniert sein können, zum Einsatz kommen.

Ein alternatives Feder-Nut-System kann eine Steckrichtung aufweisen, die senkrecht zur Plattenebene ausgerichtet ist. Vorzugsweise kann ein solches Feder-Nut-System puzzleförmig ausgebildet sein, d.h. Hinterschnitte der zusammenwirkenden Elemente des Feder-Nut-Systems aufweisend, die eine Relativbewegung benachbarter Bodenplatten in Richtung der Plattenebene verhindern. Insbesondere ein solches puzzleförmiges Feder-Nut-System kann vorteilhafter Weise mittels eines Fingerfräsers eingebracht werden.

Als besonders vorteilhaftes Verfahren zum Urformen der Bodenplatten hat sich das Gießen und insbesondere das Spritzgießen herausgestellt. Dieses ermöglicht ein schnelles und vergleichsweise günstiges Urformen der Bodenplatten.

Das Abplanen vor dem Einbringen des Feder-Nut-Systems ermöglicht ein besonderes passgenaues Herstellen des Feder-Nut-Systems, insbesondere wenn es sich hierbei um ein Feder-Nut-System handelt, dessen Steckrichtung parallel zur Plattenebene ausgerichtet ist. Ohne ein solches vorausgehendes Abplanen könnte das mit der Verwendung von Recyclingkunststoff verbundene, schwierig kalkulierbare Schrumpfverhalten der Bodenplatten dazu führen, dass das Federelement sowie die korrespondierende Nut benachbarter Bodenplatten, die zusammen gesteckt werden sollen, einen Höhenversatz aufweisen. Durch das Abplanen, das durch Planfräsen erfolgt, kann vor dem Einbringen des Feder-Nut-Systems in die Bodenplatten sichergestellt werden, dass ein solcher Höhenversatz ausgeschlossen wird.

In einer besonders bevorzugten Ausführungsform ist vorgesehen, dass die Bodenplatten auf ihrer Unterseite, d.h. derjenigen Seite, die beim Verlegen auf dem Untergrund zum Aufliegen kommt, plangefräst werden. Hierdurch kann ein Verkleben der Bodenplatten mit dem Untergrund erheblich verbessert werden, da die Oberfläche der Bodenplatten durch das Planfräsen aufgeraut wird, wodurch die adhesive Wirkung des eingesetzten Klebstoffs erheblich verbessert werden kann.

Die Erfindung wird nachfolgend anhand von in den Zeichnungen dargestellten Ausführungsbeispielen näher erläutert.

In den Zeichnungen zeigen:
- Fig. 1 bis 3: jeweils in einer Schnittdarstellung drei unterschiedliche Bodenplatten, die mittels eines erfindungsgemäßen Verfahrens hergestellt wurden und
- Fig. 4: die Bodenplatte der Figur 3 in einer Draufsicht.

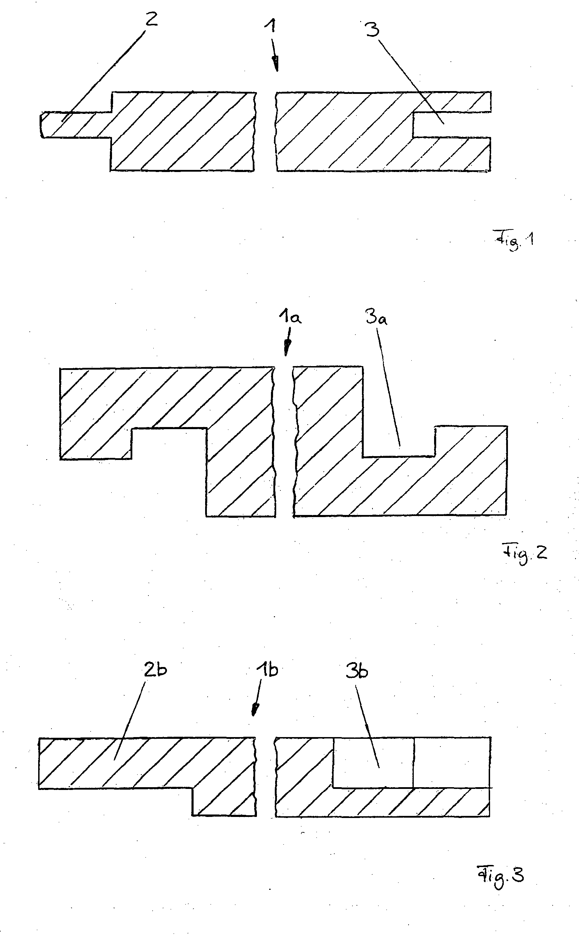

Die Figur 1 zeigt eine Bodenplatte 1 in einer Schnittdarstellung, die ein Feder-Nut-System aufweist, dessen Steckrichtung parallel zur Plattenebene ausgerichtet ist. Das Feder-Nut-System umfasst Federelemente 2, die an zwei aneinander stoßenden Kanten der quadratischen Bodenplatte 1 vorgesehen ist. An den zwei übrigen Kanten ist eine korrespondierende Nut 3 in die Bodenplatte 1 eingebracht.

Die dargestellte Bodenplatte 1 ist aus PVC-Recyclingmaterial hergestellt, wobei die Herstellung der Bodenplatte 1 folgendermaßen erfolgt. Zunächst wird das PVC-Recyclingmaterial, das eine Vielzahl alter PVC-Komponenten umfasst, granuliert und daraufhin einer Spritzgießmaschine (nicht dargestellt) zugeführt, in der dieses zunächst aufgeschmolzen und über einen Schneckenextruder unter einem Druck von bis zu 320 bar in eine entsprechend ausgeformte Kavität eines Spritzgießwerkzeugs gedrückt wird. Nachdem die Kavität des Spritzgießwerkzeugs vollständig mit dem aufgeschmolzenen PVC ausgefüllt wurde, kühlt das PVC in dem Spritzgießwerkzeug soweit ab, dass die Bodenplatte 1 handhabbar ist und aus dem Spritzgießwerkzeug entnommen werden kann. Nach dem Entnehmen aus dem Spritzgießwerkzeug wird überschüssiges Material im Bereich des Angusses abgeschnitten und die Bodenplatte 1 gegebenenfalls in diesem Bereich plangeschliffen. Daraufhin wird die Bodenplatte 1 auf ihrer Unterseite, die vorzugsweise diejenige Seite ist, an der sich der Anguss befindet, plangefräst und hierbei auf das geforderte Dickemaß gebracht. Hierbei kann vorzugsweise ein Kopffräser zum Einsatz kommen. Auf der plangefrästen Unterseite aufliegend wird die Bodenplatte 1 daraufhin in ein CNC-Bearbeitungszentrum eingebracht, in dem mittels eines kombinierten Kopf- und Seitenfräsers zunächst die Kantenlängen der Bodenplatte 1 auf das geforderte Maß gebracht und anschließend sowohl die Federelemente 2 als auch die Nuten 3 spanend eingebracht werden. Die spanende Bearbeitung der Bodenplatte erfolgt bei einer Temperatur im Bereich von 20°C bis 21 °C, um eine mangelnde Maßhaltigkeit der fertig bearbeiteten Bodenplatte aufgrund eines gegebenenfalls nachträglichen Abkühlens des Werkstoffes zu vermeiden. Die Fixierung der Bodenplatte 1 in dem CNC-Bearbeitungszentrum erfolgt mittels Unterdruck, der durch eine Vielzahl von Entlüftungsöffnungen in der Auflage, auf der die Bodenplatte aufliegt, aufgebracht wird.

Die Figur 2 zeigt eine Bodenplatte 1a mit einem alternativen Feder-Nut-System. Dieses Feder-Nut-System weist eine Steckrichtung auf, die senkrecht zur Plattenebene ausgerichtet ist. Dieses Feder-Nut-System weist den Vorteil auf, dass benachbarte, miteinander verbundene Bodenplatten 1a formschlüssig in Richtung der Plattenebene miteinander verbunden sind, wodurch ein ungewolltes Auseinanderschieben verhindert werden kann. Die Herstellung der Bodenplatte gemäß Figur 2 erfolgt entsprechend der Bodenplatte der Figur 1, wobei zum Einbringen der Nuten 3a auch ein Fingerfräser zum Einsatz kommen kann.

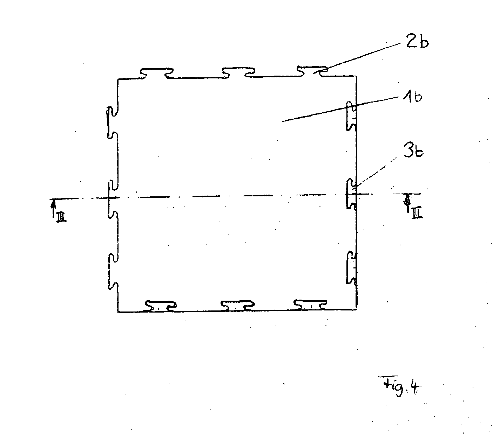

Die Figuren 3 und 4 zeigen eine Bodenplatte 1b mit einem puzzleförmigen Feder-Nut-System. Dieses Feder-Nut-System, das wiederum eine Steckrichtung aufweist, die senkrecht zur Plattenebene ausgerichtet ist, zeichnet sich durch Federelemente 2b sowie entsprechende Nuten 3b aus, die (in der Plattenebene) hinterschnittige Bereiche 4 ausbilden, so dass wiederum eine formschlüssige Verbindung benachbarter Bodenplatten 1b in Richtung der Plattenebene der Bodenplatten 1b entsteht. In der Figur 3, die einen Schnitt durch die Bodenplatte der Figur 4 entlang der Linie III - III darstellt, ist zu erkennen, dass sich die Federelemente 2b sowie die korrespondierenden Nuten 3b nicht über die vollständige Dicke der Bodenplatte 1b erstrecken. Selbstverständlich ist jedoch auch eine Ausführungsform möglich, bei der sich die Nuten über die gesamte Dicke der Bodenplatte erstrecken und die korrespondierenden Federelemente ebenfalls eine entsprechende Dicke aufweisen.

## Patentansprüche

1. Verfahren zum Herstellen einer Bodenplatte (1; 1 a; 1 b) unter Verwendung eines elastischen Kunststoffwerkstoffes, wobei als Kunststoffwerkstoff ein Recyclingkunststoff verwendet wird und die Bodenplatte (1; 1a; 1b) urgeformt und ein Feder-Nut-System spanend eingebracht wird, **gekennzeichnet durch**
Verwenden von ausschließlich dem Recyclingkunststoff, so dass die Bodenplatte (1; 1a; 1b) aus dem Recyclingkunststoff besteht,
Urformen der Bodenplatte (1; 1 a; 1 b) mit einem Übermaß zum geforderten Maß der Bodenplatte (1; 1a; 1b), und
spanendes Bearbeiten der urgeformten, abgekühlten Bodenplatte (1; 1a; 1b), das ein Planfräsen der Grundfläche der Bodenplatte (1; 1 a; 1 b) auf das geforderte Dickemaß, danach eine Bearbeitung der Kanten auf das geforderte Maß und danach ein Einbringen des Feder-Nut-Systems umfasst.

2. Verfahren nach Anspruch 1, **dadurch gekennzeichnet, dass** das Planfräsen bei einer Temperatur in einem Bereich von etwa 20°C bis 21 °C erfolgt.

3. Verfahren gemäß Anspruch 2, **gekennzeichnet durch** die Verwendung von PVC-Recyclingmaterial.

4. Verfahren gemäß einem der vorhergehenden Ansprüche, **dadurch gekennzeichnet, dass** ein Feder-Nut-System eingebracht wird, dessen Steckrichtung parallel zur Plattenebene ausgerichtet ist.

5. Verfahren gemäß Anspruch 4, **dadurch gekennzeichnet, dass** das Feder-Nut-System mit einem Kopf- und einem Seitenfräser eingebracht wird.

6. Verfahren gemäß einem der Ansprüche 1 bis 3, **dadurch gekennzeichnet, dass** ein Feder-Nut-System eingebracht wird, dessen Steckrichtung senkrecht zur Plattenebene ausgerichtet ist.

7. Verfahren gemäß Anspruch 6, **gekennzeichnet durch** ein puzzleförmiges Feder-Nut-System.

8. Verfahren gemäß Anspruch 6 oder 7, **dadurch gekennzeichnet, dass** das Feder-Nut-System mit einem Fingerfräser eingebracht wird.

9. Verfahren gemäß einem der vorhergehenden Ansprüche, **dadurch gekennzeichnet, dass** die Bodenplatte (1; 1a; 1b) spritzgegossen wird.

10. Verfahren gemäß einem der vorhergehenden Ansprüche, **dadurch gekennzeichnet, dass** die Bodenplatte (1; 1 a; 1 b) auf ihrer Unterseite plangefräst wird.

## Claims

1. Method for the production of a floor panel (1; 1 a; 1 b) using an elastic plastic material, whereby a recycled plastic is used as the plastic material and the floor panel (1; 1 a; 1 b) is primary moulded and a tongue and groove system is machined, **characterised in that** recycled plastic is exclusively used so that the floor panel (1; 1 a; 1 b) consists of the plastic material, the floor panel (1; 1 a; 1 b) is primary formed with an excess to the required dimensions of the floor panel (1; 1 a; 1 b), and the primary formed, cooled floor panel (1; 1 a; 1 b) is machined, which comprises the face milling of the surface area of the floor panel (1; 1 a; 1 b) to the required thickness followed by the finishing of the edges to the required dimensions and then followed by the cutting of the tongue and groove system.

2. Method according to Claim 1, **characterised in that** the face milling is carried out at a temperature in the range of approximately 20°C to 21°C.

3. Method according to Claim 2, **characterised by** the use of recycled PVC material.

4. Method according to any one of the preceding claims, **characterised in that** a tongue and groove system is cut through whose mating direction is aligned parallel to the panel plane.

5. Method according to Claim 4, **characterised in that** the tongue and groove system is cut through using a head and lateral milling cutter.

6. Method according to any one of Claims 1 to 3, **characterised in that** a tongue and groove system is cut through whose mating direction is aligned perpendicular to the panel plane.

7. Method according to Claim 6, **characterised by** a puzzle-shaped tongue and groove system.

8. Method according to Claim 6 or 7, **characterised in that** the tongue and groove system is cut through using an end mill.

9. Method according to any one of the preceding claims, **characterised in that** the floor panel (1; 1a; 1b) is injection moulded.

10. Method according to any one of the preceding claims, **characterised in that** the floor panel (1; 1 a; 1 b) is face-milled on its underside.

## Revendications

1. Procédé de fabrication d'un panneau de sol (1 ; 1a ; 1b) avec utilisation d'une matière plastique élastique, une matière plastique de recyclage étant employée en tant que matière plastique, ledit panneau de sol (1 ; 1 a ; 1 b) étant initialement moulé, puis un système de rainures et de languettes étant intérieurement façonné par enlèvement de copeaux, **caractérisé par**
l'utilisation exclusive de la matière plastique de recyclage, de sorte que le panneau de sol (1 ; 1 a ; 1 b) est constitué par ladite matière plastique de recyclage,
un moulage initial du panneau de sol (1 ; 1a ; 1b) avec un surdimensionnement par rapport à la cote requise dudit panneau de sol (1 ; 1 a ; 1 b), et
un usinage par enlèvement de copeaux dudit panneau de sol (1 ; 1 a ; 1 b) initialement moulé et refroidi, incluant un dressage à la fraise de la surface de base dudit panneau de sol (1 ; 1a ; 1 b) jusqu'à la cote en épaisseur requise, suivi d'un usinage des arêtes jusqu'à la cote requise, puis d'un façonnage intérieur du système de rainures et de languettes.

2. Procédé selon la revendication 1, **caractérisé par le fait que** le dressage à la fraise est exécuté à une température située dans une plage d'environ 20° C à 21° C.

3. Procédé selon la revendication 2, **caractérisé par** l'utilisation d'un matériau de PVC de recyclage.

4. Procédé selon l'une des revendications précédentes, **caractérisé par** le façonnage intérieur d'un système de rainures et de languettes dont la direction d'emboîtement est orientée parallèlement au plan du panneau.

5. Procédé selon la revendication 4, **caractérisé par le fait que** le système de rainures et de languettes est intérieurement façonné à l'aide d'une fraise frontale et d'une fraise latérale.

6. Procédé selon l'une des revendications 1 à 3, **caractérisé par** le façonnage intérieur d'un système de rainures et de languettes dont la direction d'emboîtement est orientée perpendiculairement au plan du panneau.

7. Procédé selon la revendication 6, **caractérisé par** un système de rainures et de languettes en forme de puzzle.

8. Procédé selon la revendication 6 ou 7, **caractérisé par le fait que** le système de rainures et de languettes est intérieurement façonné à l'aide d'une fraise à queue.

9. Procédé selon l'une des revendications précédentes, **caractérisé par le fait que** le panneau de sol (1 ; 1a ; 1 b) est moulé par injection.

10. Procédé selon l'une des revendications précédentes, **caractérisé par le fait que** le panneau de sol (1 ; 1 a ; 1 b) est aplani par fraisage sur sa face inférieure.
